# EUROPEAN PATENT APPLICATION

(11) **EP 1 988 124 A1**
(43) Date of publication of application: **05.11.2008**
(21) Application number: 07707910.1
(22) Date of filing: 01.02.2007
(51) Int. Cl.: C08L 45/00, C08L 25/04, C08L 65/00

(54) **POLYMER COMPOSITION**

(30) Priority: 03.02.2006 JP 2006027451
(71) Applicant: Zeon Corporation, Tokyo 100-8246 (JP)
(72) Inventor: TAKAHASHI, Kazuhiro, Tokyo 100-8246 (JP)
(74) Representative: Vossius & Partner
(86) International application number: PCT/JP2007/051724
(87) International publication number: WO 2007/088941

(57) **Abstract**

A polymer composition having an iodine value of no less than 0.1 and no more than 0.55 is obtained by adding a light stabilizer such as N,N'-bis-(2,2,6,6-tetramethyl-4-piperidinyl)-N,N'-bis-formyl-hexamethylenediamine and an antioxidant such as 2-[1-(2-hydroxy-3,5-di-t-pentylphenyl) ethyl]-4,6-di-t-pentylphenyl acrylate to an alicyclic structure-containing polymer having a low iodine value; and an optical molded body having an iodine value of no less than 0.1 and no more than 0.6 is obtained by molding this polymer composition containing an alicyclic structure-containing polymer and a light stabilizer and/or an antioxidant.

## Description

### TECHNICAL FIELD

The present invention relates to a polymer composition having a high light transmittance and capable of achieving a molded body, in which light transmittance hardly deteriorates even when blue laser is irradiated thereon at high temperatures or when placed in a high temperature and high humid environment.

### BACKGROUND ART

An optical molded body is a molded body applied for various purposes by using optical phenomena such as refraction, reflection, diffraction, and birefringence. Examples of the molded bodies for optics include a lens for optical equipment such as a convex lens, a concave lens, a Fresnel lens, a collimate lens, a lenticular lens, a pickup lens, a grating lens, a geodesic lens, an fθ lens, and an aspherical lens; a prism; an optical information recording medium such as an MO, a DVD, and a CD; and an optical sheet or an optical plate for display devices such as a retardation film, a polarizing plate, a light reflecting plate, a light diffusion plate, a light guide plate, and a prism sheet.
Of these, the optical molded bodies used in an information device which writes and reads information by light, for example, a pickup lens, a prism, or the like are strongly required to have their properties unchanged even when the integrated irradiation quantity of light increases. In particular, information devices using blue laser light that can achieve high recording density are developed and there is a demand for the development of optical molded bodies for blue lasers compatible with these devices.

As a transparent polymer composition used for the optical molded body, a composition disclosed in Patent Document 1 in which a cycloolefin resin and a light stabilizer and/or an antioxidant are mixed is known, for example, and obtaining of a lens by molding the composition is also known.

Various light stabilizers and/or antioxidants suited for enhancing the light stability and antioxidant properties of optical molded bodies have been proposed. For example, in Patent Document 2, a composition in which a polycondensation product of dibutylamine, 1,3,5-triazine-N,N'-bis(2,2,6,6-tetramethyl-4-piperidyl-1,6-hexamethylenediamine, and N-(2,2,6,6-tetramethyl-4-piperidyl)butylamine is mixed in a polymer containing an alicyclic structure has been disclosed. In Patent Document 3, a polymer composition in which bis(2,2',6,6'-tetramethyl-4-piperidine)sebacate is mixed in a polymer containing an alicyclic structure has been disclosed. In Patent Document 4, a composition in which [1-{2-(3-[3,5-di-t-butyl-4-hydroxyphehyl]propionyloxy)ethyl}-4-{3-3,5-dit-butyl-4-hydroxyphenyl}propionyloxy]-2,2,6,6-tetramethylpiperidine is mixed in a thermoplastic norbornene resin has been disclosed. In Patent Document 5, a polymerization product of dimethyl succinate and 4-hydroxy- 2,2,6,6-tetramethyl- 1-piperidine ethanol or bis[1,2,2,6,6- pentamethyl- 4-piperidyl] [{3,5- bis(1,1- dimethylethyl)- 4-hydroxyphenyl} methyl] butylmalonate is mixed in a polymer containing an alicyclic structure has been disclosed. Additionally, in Patent Documents 6 and 7, piperidine derivatives such as N,N'- (2,2,6,6-tetramethyl- 4-piperidinyl)- N,N'- bisformyl-hexamethylenediamine have been disclosed, and the mixing thereof in synthetic resins such as polyethylene, a polycarbonate resin, and a polymethacrylate resin has also been disclosed. Patent Document 6 describes that this piperidine derivative does not have an intrinsic color, has a satisfactory compatibility with organic polymers, has a low vapor pressure, and is also stable against thermal decomposition.

On the other hand, the polymers containing an alicyclic structure have also been studied. For example, a random multicomponent copolymer having an iodine value of 0.7 to 1.0 formed of an α-olefin and/or a cycloolefin is described in Patent Document 8. In addition, a norbornene based polymer composition containing at least a norbornene based polymer having an iodine value of less than 1.0, a lactone antioxidant, phenol antioxidant and/or a phosphorus antioxidant is disclosed in Patent Document 9.

[Patent Document 1] JP 2005-202056 A
[Patent Document 2] JP 2003-276047 A
[Patent Document 3] JP H07-216152 A
[Patent Document 4] JP H09-268250 A
[Patent Document 5] WO 01/92412
[Patent Document 6] JP H01-160959 A
[Patent Document 7] JP 2003-529588 W
[Patent Document 8] JP S61-115912 A
[Patent Document 9] JP 2000-143944 A

### DISCLOSURE OF THE INVENTION

### PROBLEMS TO BE SOLVED BY THE INVENTION

The molded bodies in the form of lens obtained by molding polymer compositions as disclosed in these patent documents do not exhibit deteriorations in the optical properties; i.e., do not become cloudy, for example, as long as the irradiation is conducted with relatively weak light at room temperature. However, when they are irradiated with blue laser light, which is strong light, at a high temperature, the light transmittance thereof deteriorates considerably and there were cases where lens properties could not be maintained.
The present inventor verified that this phenomenon is caused by the unsaturated bonds that are present in a trace amount in the polymer compositions. Even in the case where the polymers are highly hydrogenated and the polymers having high hydrogenation ratio calculated from a ¹H-NMR spectrum are used, when the polymers are sufficiently dried for the actual production of molded bodies, unsaturated bonds are sprouted in the resin during this drying process. Moreover, the light stabilizers or the antioxidants mixed in the polymer compositions contain unsaturated bonds which originate from these compounding ingredients themselves or the impurities attached to the compounding ingredients, although in an extremely trace amount. It has been discovered that such unsaturated bonds present in a scarce amount greatly influence the lens properties in the environment where blue laser light is irradiated.
An object of the present invention is to provide a polymer composition capable of achieving a molded body, which has high light transmittance in the initial state and in which the light transmittance is unlikely to deteriorate even after blue laser light is irradiated thereon at high temperatures and even after placed under a high-temperature and high-humidity environment.

### MEANS FOR SOLVING THE PROBLEMS

The present inventor conducted various studies in order to accomplish the aforementioned object and discovered the following as a result. That is, with a composition comprising a polymer containing an alicyclic structure such as a cycloolefin resin, and a light stabilizer and/or an antioxidant, it is possible to achieve a molded body, which has high light transmittance in the initial state and in which the light transmittance is unlikely to deteriorate even after blue laser light is irradiated thereon at high temperatures and even after placed under a high-temperature and high-humidity environment by molding a polymer composition having an iodine value of no less than 0.1 and no more than 0.55. The present invention is completed based on this finding.

That is, the present invention includes the following aspects.
(1) A polymer composition comprising an alicyclic structure-containing polymer and a light stabilizer and/or an antioxidant, and having an iodine value of no less than 0.1 and no more than 0.55.
(2) The polymer composition in which the iodine value of the alicyclic structure-containing polymer is 0.1 or less.
(3) The polymer composition in which the alicyclic structure-containing polymer is a norbornene based polymer.
(4) The polymer composition in which the norbornene based polymer is a hydrogenated product of an addition polymer formed of a norbornene monomer and another monomer which is addition copolymerizable therewith.
(5) The polymer composition in which the alicyclic structure-containing polymer is a vinyl alicyclic hydrocarbon polymer.
(6) The polymer composition in which the light stabilizer is a hindered amine light stabilizer.
(7) The polymer composition in which the light stabilizer is N,N'-bis(2,2,6,6-tetramethyl-4-piperidyl)-N,N'-diformyl hexamethylenediamine.
(8) The polymer composition in which the antioxidant is a phenol antioxidant.
(9) The polymer composition in which the antioxidant is 2-[1-(2-hydroxy-3,5-di-t-pentylphenyl)ethyl]-4,6-di-t-pentylphenyl acrylate.
(10) The polymer composition further comprising a moisture resisting agent.

(11) An optical molded body which is formed from a polymer composition comprising an alicyclic structure-containing polymer and a light stabilizer and/or an antioxidant, which has an iodine value of no less than 0.1 and no more than 0.6.
(12) The optical molded body in which the iodine value of the alicyclic structure-containing polymer is 0.1 or less.
(13) The optical molded body in which the alicyclic structure-containing polymer is a norbornene based polymer.
(14) The optical molded body in which the norbornene based polymer is a hydrogenated product of an addition polymer formed of a norbornene monomer and another monomer which is addition copolymerizable therewith.
(15) The optical molded body in which the alicyclic structure-containing polymer is a vinyl alicyclic hydrocarbon polymer.
(16) The optical molded body in which the light stabilizer is a hindered amine light stabilizer.
(17) The optical molded body in which the light stabilizer is N,N'-bis(2,2,6,6-tetramethyl-4-piperidyl)-N,N'-diformyl hexamethylenediamine.
(18) The optical molded body in which the antioxidant is a phenol antioxidant.
(19) The optical molded body in which the antioxidant is 2-[1-(2-hydroxy-3,5-di-t-pentylphenyl)ethyl]-4,6-di-t-pentylphenyl acrylate.
(20) The optical molded body further comprising a moisture resisting agent.

### ADVANTAGES OF THE INVENTION

The optical molded body which uses the polymer composition of the present invention is excellent in terms of transparency, and not only its light transmittance hardly deteriorates even when blue laser light is irradiated thereon for a prolonged time at room temperature, but also its light transmittance is unlikely to deteriorate even after blue laser light is irradiated thereon at high temperatures or even after placed under a high-temperature and high-humidity environment. And, the polymer composition of the present invention is suitable as an optical material such as a lens, a diffraction grating, and a prism, and especially as an optical material to which blue laser is employed.

### BEST MODE FOR CARRYING OUT THE INVENTION

A polymer composition in the present invention comprises an alicyclic structure-containing polymer and a light stabilizer and/or an antioxidant.

### (Alicyelic structure-containing polymer)

The alicyclic structure-containing polymer used in the present invention is a polymer containing an alicyclic structure in the repeating unit of the polymer. Although a polymer may have the alicyclic structure either in its main chain or in its side chain, the polymer having the alicyclic structure in its main chain is preferable from the viewpoints of mechanical strength and heat resistance of the obtained molded body, and the like.
Examples of the alicyclic structure include a cycloalkane structure and a cycloalkene structure, and the cycloalkane structure is preferable from the viewpoints of thermal stability of the polymers, and the like.

The number of carbon atoms forming the alicyclic structure is usually within a range of 4 to 30 carbon atoms, preferably 5 to 20 carbon atoms, and more preferably 5 to 15 carbon atoms. When the number of carbon atoms is within this range, the heat resistance of the obtained molded body will be excellent.
Proportion of the repeating unit having the alicyclic structure in the alicyclic structure-containing polymer may be selected appropriately depending on the intended use. However, it is usually at least 50% by weight, preferably at least 70% by weight, and more preferably at least 90% by weight. When the proportion of the repeating unit having the alicyclic structure in the alicyclic structure-containing polymer is within this range, the heat resistance of the obtained molded body will be excellent.
It should be noted that the alicyclic structure-containing polymer apart from the repeating unit having the alicyclic structure, that is, the remnant part thereof is selected appropriately depending on the intended use.

Specific examples of the alicyclic structure-containing polymers include (1) a norbornene based polymers, (2) a monocyclic cycloolefin polymers, (3) a cyclic conjugated diene polymers and (4) a vinyl alicyclic hydrocarbon polymers.
Among them, the norbornene based polymers, the cyclic conjugated diene polymers, and the vinyl alicyclic hydrocarbon polymers are preferable from the viewpoints of heat resistance, mechanical strength, and the like, and the norbornene based polymers and the vinyl alicyclic hydrocarbon polymers are more preferable from the viewpoints of heat resistance and mechanical strength of the obtained molded body, and the like.

### (1) Norbornene based polymers

Examples of the norbornene based polymers include a ring opening polymer of a norbornene monomer, a ring opening polymer of a norbornene monomer and another monomer capable of being ring opening copolymerized therewith, and the hydrogenated products thereof; an addition polymer of a norbornene monomer, an addition polymer of a norbornene monomer and another monomer capable of addition copolymerized therewith, and the hydrogenated products thereof.

The norbornene monomer used to obtain the norbornene based polymer is a monomer having a norbornene structure.
Examples of the norbornene monomers include bicyclo[2.2.1]hept-2-ene (popular name: norbornene) and the derivatives thereof (those having a substituent group in the ring), tricyclo[4.3.0.1^{2,5}]deca-3,7-diene (popular name: dicyclopentadiene) and the derivatives thereof, tetracyclo[7.4.0.0^{2,7}.1^{10,13}] trideca-2,4,6,11-tetraene (popular name: methanotetrahydrofluorene) and the derivatives thereof, and tetracyclo[4.4.0.1^{2,5}.1^{7,10}] dodec-3-ene (popular name: tetracyclododecene) and the derivatives thereof. Examples of the substituent group include an alkyl group, an alkylene group, a vinyl group, and an alkoxycarbonyl group. And the abovementioned norbornene monomers may be used alone or in combination of two or more.

Examples of the norbornene monomers having a substituent group include 8-methoxycarbonyl-tetracyclo [4.4.0.1^{2,5}.1^{7,10}]dodec-3-ene, 8-methyl-8-methoxycarbonyl-tetracyclo[4.4.0.1^{1,5}.1^{7,10}] dodec-3-ene, and the like. These norbornene monomers are used alone or in combination of two or more.

The ring opening polymers of these norbornene monomers or the ring opening polymers of the norbornene monomers and other monomers capable of being ring opening copolymerized therewith can be obtained by polymerizing a monomer component in the presence of a known catalyst for ring opening polymerization.
Examples of the catalysts for ring opening polymerization include a catalyst composed of a halide, a nitrate or an acetylacetone compound of a metal such as ruthenium and osmium, and a reducing agent; or a catalyst composed of a halide or an acetylacetone compound of a metal such as titanium, zirconium, tungsten or molybdenum, and a cocatalyst such as an organic aluminum compound.

Examples of other monomers capable of being ring opening copolymerized with the norbornene monomers include monocyclic cycloolefin monomers such as cyclohexene, cycloheptene, and cyclooctene.
The hydrogenated products of the ring opening polymers of the norbornene monomers can usually be obtained by adding a known hydrogenation catalyst containing a transition metal such as nickel and palladium to a polymerization solution of the abovementioned ring opening polymer, and hydrogenating the carbon-carbon unsaturated bonds.

The addition polymers of the norbornene monomers or the addition polymers of the norbornene monomers and other monomers capable of being addition copolymerized therewith can be obtained by polymerizing a monomer component using a known addition polymerization catalyst, for example, a catalyst composed of a titanium compound, a zirconium compound, or a vanadium compound and an organic aluminum compound.

For example, α-olefins having 2 to 20 carbon atoms such as ethylene, propylene, 1-butene, 1-pentene, 1-hexene, 1-octene, 1-decene, 1-dodecene, 1-tetradecene, 2-hexadecene, 1-octadecene and 1-eicosene, and the derivatives thereof; cycloolefins such as cyclobutene, cyclopentene, cyclohexene, cyclooctene, and 3a,5,6,7a-tetrahydro-4,7-methano-1H-indene, and the derivatives thereof; non-conjugated dienes such as 1,4-hexadiene, 4-methyl-1,4-hexadiene, 5-methyl-1,4-hexadiene, and 1,7-octadiene; can be used as other monomers capable of being addition copolymerized with the norbornene monomers.
Among them, an α-olefin, especially ethylene is preferable. These other monomers capable of being addition copolymerized with the norbornene monomers can be used alone or in combination of two or more.

When a norbornene monomer and another monomer capable of being addition copolymerized therewith are addition copolymerized, the proportion between the structural unit derived from the norbornene monomer and the structural unit derived from another monomer in the addition polymer is selected appropriately, usually within a range of 30:70 to 99:1, preferably 50:50 to 97:3, and more preferably 70:30 to 95:5, in terms of weight ratio.

In addition, it is preferable that a monomer component is addition polymerized and then the product is hydrogenated in order to obtain an addition polymer having an iodine value of 0.1 or less. As the hydrogenation catalyst, known heterogeneous catalysts, such as a catalyst in which a metal such as nickel and palladium is supported on a carrier, can be used in combination, where appropriate. As the hydrogenation catalyst, it is particularly preferable to combine a catalyst containing nickel and a catalyst containing palladium.
Examples of the carrier include alumina, silica, and diatomaceous earth.
Hydrogenation reactions are usually carried out in a solvent. As a solvent, the same solvent usable in the polymerization of monomers can be used.
Hydrogenation reactions are carried out at a temperature usually within a range of 100 to 200°C, preferably 130 to 195°C, and at a hydrogen pressure usually within a range of 0.01 to 10 MPa, preferably 0.05 to 6 MPa, and more preferably 0.1 to 5 MPa.

### (2) Monocyclic cycloolefin polymers

Examples of the monocyclic cycloolefin polymers include addition polymers of monocyclic cycloolefin monomers such as cyclohexene, cycloheptene, and cyclooctene, and the hydrogenated products thereof.

### (3) Cyclic conjugated diene polymers

Examples of the cyclic conjugated diene polymers include polymers obtained by a 1,2- or a 1,4-addition polymerization of cyclic conjugated diene monomers such as cyclopentadiene and cyclohexadiene, and the hydrogenated products thereof.

The weight average molecular weight of the norbornene based polymer, the monocyclic cycloolefin polymer, or the cyclic conjugated diene polymer is selected appropriately depending on the intended use. However, it is usually within a range of 5,000 to 500,000, preferably 8,000 to 200,000, more preferably 10,000 to 100,000, and particularly preferably 20,000 to 60,000. When the weight average molecular weight is within this range, it is suitable since the molding processability of the obtained polymer composition and the mechanical strength of the obtained molded body will be highly balanced.
The weight average molecular weight used here is a polyisoprene- or a polystyrene- equivalent value measured by gel permeation chromatography using a cyclohexane solution (a toluene solution is used instead when a polymer resin is insoluble).

### (4) Vinyl alicyclic hydrocarbon polymers

Examples of the vinyl alicyclic hydrocarbon polymers include a polymer of a vinyl alicyclic hydrocarbon monomer such as vinylcyclohexene and vinylcyclohexane, and the hydrogenated products thereof; and an aromatic ring hydrogenated polymer of a vinyl aromatic monomer such as styrene and α-methylstyrene; as well as copolymers such as random copolymers and block copolymers of a vinyl alicyclic hydrocarbon monomer or a vinyl aromatic monomer and other monomers copolymerizable with these monomers such as butadiene and isoprene, and the hydrogenated products thereof. The block copolymers are not particularly limited and examples thereof include diblock copolymers, triblock copolymers, or even higher multiblock copolymers, and gradient block copolymers.

When the vinyl aclicyclic hydrocarbon polymer is an aromatic ring hydrogenated polymer of a vinyl aromatic monomer, the aromatic ring moiety needs to be hydrogenated. Accordingly, the hydrogenation ratio of the vinyl alicyclic hydrocarbon polymer used in the present invention is usually substantially 100%. The description of hydrogenation ratio being substantially 100% used here refers to the state where the peak attributed to the aromatic ring and the peak attributed to the aliphatic carbon-carbon double bond are not detected in ¹H-NMR spectrum.
When such high hydrogenation ratio can be achieved, it is possible to obtain a polymer having an iodine value of 0.1 or less. As the conditions for the hydrogenation reactions, the same conditions for the hydrogenation reactions of addition polymers described earlier are adopted.

The weight average molecular weight of the vinyl alicyclic hydrocarbon polymer is selected appropriately depending on the intended use. However, it is usually within a range of 10,000 to 300,000, preferably 15,000 to 250,000, and more preferably 20,000 to 200,000. When the weight average molecular weight is within this range, it is preferable since the molding processability of the obtained polymer composition and the mechanical strength of the obtained molded body will be highly balanced.
The weight average molecular weight used here is a polyisoprene equivalent value (a polystyrene equivalent value when toluene or tetrahydrofuran is used) measured by gel permeation chromatography using a cyclohexane solution (a toluene- or a tetrahydrofuran solution when a polymer resin is insoluble).

### (Light stabilizer)

Examples of the light stabilizer that can be contained in the polymer composition of the present invention include a hindered amine light stabilizer (HALS) and a benzoate light stabilizer.
Examples of the hindered amine light stabilizers include N,N'-bis(2,2,6,6-tetramethyl- 4-piperidyl)-N,N'-diformyl hexamethylenediamine, N,N'- bis(1,2,2, 6,6-pentamethyl- 4-piperidyl)- N,N'-diformyl hexamethylenediamine, and bis(1,2,2,6,6-pentamethyl- 4-piperidyl) [[3,5- bis (1,1-dimethylethyl)- 4-hydroxyphenyl] methyl] butylmalonate.

Examples of the benzoate light stabilizers include 4-benzoyloxy-2,2,6,6-tetramethylpiperidine.
These light stabilizers can be used alone or be used in combination of two or more types thereof. Among them, hindered amine light stabilizers can be suitably used and, in particular, N,N'- bis (2, 2, 6, 6- tetramethyl- 4- piperidyl)- N,N'- diformyl hexamethylenediamine can be suitably used.
The amount of light stabilizers added is preferably 0.01 to 2 parts by weight, more preferably 0.02 to 1 part by weight, and particularly preferably 0.05 to 0.5 part by weight, with respect to 100 parts by weight of the alicyclic structure-containing polymer from the viewpoint of chromaticity.

### (Antioxidant)

Examples of the antioxidants that can be contained in the polymer composition of the present invention include a phenol antioxidant, phosphorus antioxidant, and sulfur antioxidant. Among them, the phenol antioxidant is preferable and the alkyl substituted phenol antioxidant is more preferable.
Examples of the phenol antioxidants include 2,6-di-t-butyl-4-methylphenol, 2,6-di-t-butyl-4-ethylphenol, octadecyl-3-(3,5-di-t-butyl-4-hydroxyphenyl)propionate, 2-[1-(2-hydroxy-3,5-di-t-pentylphenyl)ethyl]-4,6-di-t-pentylphenylacrylate, 2,2'-methylene-bis(4-methyl-6-t-butylphenol), 4,4'-butylidene-bis(6-t-butyl-m-cresol), 4,4'-thiobis(3-methyl-6-t-butylphenol), and bis(3-cyclohexyl-2-hydroxy-5-methylphenyl)methane.

Examples of the phosphorus antioxidants include triphenyl phosphite, diphenylisodecyl phosphite, phenyldiisodecyl phosphite, and tris(nonylphenyl) phosphite.
Examples of the sulfur antioxidants include dilauryl 3,3'-thiodipropionate, dimyristyl 3,3'-thiodipropionate, distearyl 3,3'-thiodipropionate, lauryl stearyl 3,3'-thiodipropionate, pentaerythritol-tetrakis-(β-lauryl-thio-propionate), and 3,9-bis(2-dodecylthioethyl)-2,4,8,10-tetraoxaspiro[5,5]undecane.
Although these antioxidants can be used alone or be used in combination of two or more types thereof, it is preferable to use them by combining two or more types thereof. When they are used in combination, it is preferable to use a phenol antioxidant and a phosphorus antioxidant concomitantly since it results in the excellent transparency of molded bodies.
Although the amount of antioxidant mixed is selected appropriately, it is usually within a range of 0.001 to 5 parts by weight, preferably 0.01 to 1 part by weight, and more preferably 0.01 to 0.1 part by weight, with respect to 100 parts by weight of the alicyclic structure-containing polymer.

Apart from a light stabilizer and an antioxidant, the polymer composition of the present invention may have other components mixed therein where appropriate that are commonly loaded in the polymers such as a moisture resisting agent, a lubricant, a flame retardant, an antiblocking agent, a mold release agent, an ultraviolet absorber, an antistatic agent, a dispersing agent, a heat stabilizer, a nucleus forming agent, a dispersing agent, a chlorine scavenger, a crystallization nucleating agent, an antifogging agent, a pigment, a dye, an organic filler, an inorganic filler, a metal deactivator, a pollution control agent, an antimicrobial agent, and other types of polymers (for example, rubbers and resins).

### (Moisture resisting agent)

It is preferable to mix a moisture resisting agent in the polymer composition of the present invention since the composition will be able to maintain satisfactory optical properties even under high temperature and high humidity conditions. As the moisture resisting agent, a soft polymer having small differences in the refractive index from that of a resin to be used as a base material is effective, and the agent that also has a low iodine value is desirable.
Examples of the soft polymers include olefin soft polymers such as liquid polyethylene, polypropylene, poly-1-butene, ethylene/α-olefin copolymers, propylene/α-olefin copolymers, ethylene/propylene/diene copolymers (EPDMs) having low iodine values, and ethylene/propylene/styrene copolymers; isobutylene soft polymers such as polyisobutylene, isobutylene/isoprene rubber, and isobutylene/styrene copolymers; diene soft polymers having low iodine values such as hydrogenated polybutadiene, hydrogenated polyisoprene, hydrogenated butadiene/styrene random copolymers, hydrogenated isoprene/styrene random copolymers, hydrogenated acrylonitrile/butadiene copolymers, hydrogenated acrylonitrile/butadiene/styrene copolymers, hydrogenated butadiene/styrene block copolymers, hydrogenated styrene/butadiene/styrene block copolymers, hydrogenated isoprene/styrene block copolymers, and hydrogenated styrene/isoprene/styrene block copolymers;

silicon-containing soft polymers such as dimethylpolysiloxane, diphenylpolysiloxane and dihydroxypolysiloxane; soft polymers formed from α,β-unsaturated acids such as polybutyl acrylate, polybutyl methacrylate, polyhydroxyethyl methacrylate, polyacrylamide, polyacrylonitrile, and butyl acrylate/styrene copolymers; soft polymers formed from unsaturated alcohols and amines or their acyl derivatives or acetal such as polyvinyl alcohol, polyvinyl acetate, polyvinyl stearate, and vinyl acetate/styrene copolymers; epoxy soft polymers such as polyethylene oxide, polypropylene oxide and epichlorohydrin rubber; fluorine soft polymers such as vinylidene fluoride rubber and ethylene tetrafluoride/propylene rubber; and soft polymers such as natural rubber, polypeptides, proteins, polyester thermoplastic elastomers, vinyl chloride thermoplastic elastomers, and polyamide thermoplastic elastomers.
The amount of moisture resisting agent is within a range that does not depart from the scope of the iodine value of the polymer composition of the present invention.

The polymer composition of the present invention is not particularly limited by its preparation method. Examples of the preparation methods include a method in which an alicyclic structure-containing polymer is kneaded in a kneading apparatus such as a roller, a kneader, an extrusion kneading machine, a Banbury mixer, and a feeder ruder while the aforementioned compounding ingredients are added; and a method in which a solution of an alicyclic structure-containing polymer and a liquid where a compounding ingredient is dissolved or dispersed are mixed, and thereafter, the solvent is removed from the mixed liquid.
In the former preparation method, it is effective to set the temperature during the kneading process preferably at 250°C or less, more preferably within a range of 200 to 230°C for maintaining low iodine values. In addition, the resin residence time during the kneading process is preferably within 120 seconds. Moreover, it is preferable that kneading be carried out in an inert gas atmosphere.
In the latter preparation method, the removal of the solvent from the mixed liquid is preferably carried out at a temperature of 290°C or less and also under reduced pressure or an inert gas atmosphere for maintaining low iodine values.

The polymer composition of the present invention needs to have an iodine value of no less than 0.1 and no more than 0.55, preferably no less than 0.1 and no more than 0.5. In order to obtain a polymer composition having an iodine value of less than 0.1, the amount of light stabilizer, antioxidant, and the like to be mixed needs to be suppressed down to an extreme extent, thereby letting the oxidation of molded bodies or the deterioration of moisture resistance thereof to progress. On the other hand, the polymer composition having an iodine value exceeding 0.55 cannot suppress the deterioration due to the irradiation of strong light such as blue laser light.
In order to reduce the iodine value of the polymer composition, it is necessary to select the alicyclic structure-containing polymer, the light stabilizer and/or the antioxidant constituting the polymer composition from those having low iodine values. It is particularly preferable that the alicyclic structure-containing polymer be selected from one having an iodine value of 0.1 or less. It should be noted that the iodine value in the present invention is a value measured by the iodine value method specified in JIS K 6235.

The optical molded body of the present invention is obtained by, for example, molding the aforementioned polymer composition by a known molding method. Examples of the molding methods include a solution casting method, a melt extrusion molding method, a press molding method, an inflation molding method, an injection molding method, a blow molding method, and a draw molding method. In order to obtain the optical molded body of the present invention, increase in the iodine value is suppressed by reducing the thermal history imposed upon the polymer composition or by suppressing the oxidation thereof in the molding process. Examples of the methods to achieve suppression in the increase of iodine values include the shortening of residence time of the polymer composition in a high temperature, melted state, and/or the conducting of molding process thereof in an inert gas atmosphere. By taking these measures, it is possible to obtain an optical molded body having an iodine value of no less than 0.1 and no more than 0.6. More specifically, it is preferable to set the resin temperature in the molding process from 230 to 280°C and to set the resin residence time in the molding process within 200 seconds.
Since the optical molded body of the present invention is highly resistant to blue laser, it is suitable for optical components that use blue laser, particularly the optical components such as pickup lenses and prism lenses where the integrated irradiation quantity of blue laser light is large.

### EXAMPLES

The present invention will be described below in further details using Examples and Comparative Examples. However, the present invention is not limited only to these Examples. It should be noted that the terms "parts" and "%" are based on weight and the unit for pressure is MPa unless stated otherwise.

### (Synthesis Example 1)

A mixed monomer was prepared by sealing 76 parts of styrene and 4 parts of isoprene in a dried and nitrogen-substituted pressure-resistant container made of stainless steel and stirring them. Next, 320 parts of dehydrated cyclohexane, 4 parts of the mixed monomer, and 0.1 part of dibutyl ether were charged in a dried and nitrogen-substituted autoclave made of stainless steel which had an electromagnetic stirring device. They were heated to 50°C and stirred while 0.18 part of a hexane solution of n-butyllithium (having a concentration of 15%) was added thereto to initiate a polymerization reaction. After 0.5 hour from the initiation of reaction, 76 parts of the mixed monomer were added to the polymerization reaction solution continuously over the course of 1 hour to continue the polymerization reaction. After 0.5 hour from the completion of the addition of the mixed monomer, 0.1 part of isopropyl alcohol was added to stop the polymerization reaction, and a styreneisoprene copolymer was obtained.

Subsequently, 8 parts of nickel hydrogenation catalyst (60% of nickel supported on a silica alumina carrier) were added to 400 parts of the abovementioned polymerization reaction solution, and the resulting mixture was charged in the autoclave made of stainless steel. The air inside the autoclave was substituted by hydrogen gas and a hydrogenation reaction was carried out at 160°C for 6 hours by supplying hydrogen so that the pressure inside the autoclave was kept at 4.5 MPa. Then pressure filtration was conducted at a pressure of 0.25 MPa using a pressure filter to obtain a clear and colorless solution, in which the catalyst was removed. By pouring this hydrogenation reaction solution into a mixed solution of 250 parts of acetone and 250 parts of isopropanol while stirring, a hydrogenated product was precipitated and then recovered by filtration. The recovered hydrogenated product was further washed with 200 parts of acetone and subsequently dried under reduced pressure for 24 hours in a vacuum dryer heated to 100°C. The yield of the hydrogenated product was 99%. This hydrogenated product had a weight average molecular weight (Mw) of 91,000, a molecular weight distribution (Mw/Mn) of 1.27, a glass transition temperature of 125°C, and an iodine value of 0.05.

### (Synthesis Example 2)

860 parts of toluene, 200 parts of 1,4-methano-1,4,4a,9a-tetrahydrofluorene, and 0.630 part of triethylaluminum dissolved in 5.18 parts of toluene were charged in a pressure-resistant reactor equipped with a stirrer.
43.5 parts of toluene, 0.04 part of rac-ethylene bis(1-indenyl) zirconium dichloride, and 0.499 part of methylaluminoxane dissolved in 2.56 parts of toluene were charged in a glass container and mixed therein, and they were added to the aforementioned pressure-resistant reactor.
Ethylene gas of 0.2 MPa was introduced to the pressure-resistant reactor and a polymerization reaction was initiated at 40°C. After 40 minutes of reaction, the reactor was degassed, and 5 parts of methanol was then added thereto to stop the polymerization reaction. This resulting solution was filtered and then poured into a large amount of hydrochloric acid methanol solution to precipitate an addition polymer. The precipitated addition polymer was fractionated, washed, and then dried under reduced pressure at 100°C for 15 hours. The addition polymer had a weight average molecular weight of 62,000, a number average molecular weight of 31,000, a molar ratio of 1,4-methano-1,4,4a,9a-tetrahydrofluorene unit/ethylene unit of 43/57 in the addition polymer, a glass transition temperature of 168°C, and an iodine value of 0.40.

### (Synthesis Example 3)

150 parts of the polymer obtained in Synthesis Example 2 was dissolved in a mixed solvent of 283 parts of toluene and 567 parts of cyclohexane. Added thereto were 30 parts of a palladium catalyst supporting silica, and then the resultant was stirred. The resulting solution was charged in an autoclave made of stainless steel and equipped with an electrothermal heating device and an electromagnetic stirring device. A hydrogenation reaction was carried out for 15 hours by maintaining the internal pressure of the autoclave at 4.5 MPa and the temperature thereof at 180°C while supplying hydrogen. The reaction liquid was filtered to obtain a clear and colorless solution. This solution was poured into a large amount of methanol to precipitate a hydrogenated polymer. The precipitated hydrogenated polymer was fractionated, washed, and then dried under reduced pressure at 100°C for 15 hours. The hydrogenated polymer had a weight average molecular weight of 41,000, a number average molecular weight of 22,000, and a glass transition temperature of 145°C. The hydrogenation ratio of the aromatic ring was at least 99%. In addition, the iodine value of the hydrogenated polymer was 0.08.

### (Comparative Example 1)

100 parts of the hydrogenated product (having an iodine value of 0.05) obtained in Synthesis Example 1, 0.1 part of N,N'-bis(2,2,6,6-tetramethyl-4-piperidyl)-N,N'-diformyl hexamethylenediamine (light stabilizer A), and 0.2 part of Septone 2002 (styrene-olefin block copolymer manufactured by Kuraray Co., Ltd., moisture resisting agent B) were kneaded and extruded by a double screw kneading machine (screw diameter of 37 mm; L/D = 32; screw rotational frequency of 250 rpm; resin temperature of 230°C; feed rate of 10 kg/hr; resin residence time of 80 seconds; and filling an inlet for introducing polymers and additives with a nitrogen atmosphere) to obtain a pelleted polymer composition. The iodine value of this polymer composition was 0.79.
The obtained pellet was dried by heating at 80°C for 4 hours and subsequently the pellet was loaded to an injection molding apparatus from a pellet input port filled with a nitrogen atmosphere, and injection molding was carried out under the conditions of a resin temperature of 260°C, a resin residence time of 180 seconds, and an injection rate of 10 mm/sec to obtain two molded bodies having a dimension of 65 mm × 65 mm × 3 mm. One molded body was broken into about 1 cm squared pieces using a nipper followed by the dissolution in chloroform to measure its iodine value. The iodine value of this molded body determined by titration was 0.85.
Next, the following evaluation test using the another molded body was conducted. The molded body had a light transmittance of 87.8%, a high-temperature and high-humidity resistance of 0.6%, and a high-temperature laser resistance of 44.8%.

### (Light transmittance)

The light transmittance of the molded body was measured with an optical path length of 3 mm and a wavelength of 400 nm using a spectrophotometer (V-570 manufactured by JASCO Corporation).

### (High-temperature and high-humidity resistance)

The molded body was allowed to stand in a high-temperature and high-humidity tester set to a temperature of 60°C and a relative humidity of 95% for 120 hours, and was then rapidly taken out of the tester and was allowed to stand at room temperature for 24 hours. Due to this procedure, the ambient environment of the molded body was rapidly changed from the high-temperature and high humidity environment to the room temperature environment. The light transmittances of the molded body before and after this environmental change were respectively measured with an optical path length of 65 mm and a wavelength of 700 nm using a spectrophotometer (V-570 manufactured by JASCO Corporation) to determine the amount reduced from the light transmittance before the molded body was put in the high-temperature and high-humidity tester. The smaller this amount of reduction is, the more excellent high-temperature and high-humidity resistance is.

### (High-temperature laser resistance)

Under an ambient temperature of 80°C, diode laser emitting 400 mW/cm² at 405 ± 10 nm was irradiated on the molded body for 240 hours. The light transmittance of the molded body after the laser irradiation was measured using a spectrophotometer (V-570 manufactured by JASCO Corporation) to determine the amount reduced from the light transmittance before the laser irradiation. The smaller this amount of reduction is, the more excellent laser resistance is.

[Table 1]

**Table 1**

| | Iodine value of composition | Iodine value of molded body | Light transmittance [%] | High- temperature and humidity resistance [%] | High- temperature laser resistance [%] |
|---|---|---|---|---|---|
| Comp. Ex. 1 | 0.79 | 0.85 | 87.8 | 0.6 | 44.8 |
| Ex. 1 | 0.39 | 0.45 | 91.0 | 0.6 | 0.5 |
| Comp. Ex. 2 | 0.63 | 0.65 | 89.9 | 0.6 | 25.1 |
| Comp. Ex. 3 | 0.56 | 0.63 | 88.9 | 0.7 | 31.5 |
| Comp. Ex. 4 | 0.67 | 0.68 | 89.8 | 0.8 | 36.2 |
| Ex. 2 | 0.36 | 0.38 | 90.7 | 0.8 | 0.8 |
| Comp. Ex. 5 | 0.72 | 1.21 | 86.0 | 0.8 | 66.0 |
| Comp. Ex. 6 | 0.95 | 1.42 | 85.0 | 0.8 | 78.0 |

### (Example 1)

A pellet of polymer composition was obtained and its iodine value was measured in the same manner as that adopted in Comparative Example 1 except that 0.05 part of 2-[1-(2-hydroxy-3,5-di-t-pentylphenyl)ethyl]-4,6-di-t-pentylphenyl acrylate (antioxidant C) was further mixed. The iodine value of the polymer composition was 0.39.
In addition, a molded body was obtained, its iodine value was measured, and the evaluation test was conducted in the same manner as that adopted in Comparative Example 1 except that this pellet was used. The iodine value of the molded body was 0.45. The molded body had a light transmittance of 91.0% at 400 nm, a high-temperature and high-humidity resistance of 0.6%, and a high-temperature laser resistance of 0.5%.

### (Comparative Example 2)

A pellet of polymer composition was obtained and its iodine value was measured in the same manner as that adopted in Comparative Example 1 except that 0.2 part of 2- [1- (2- hydroxy- 3,5- di-tertiary-pentylphenyl)ethyl]- 4,6- di-tertiary- pentylphenyl acrylate (antioxidant C) was further mixed. The iodine value of the polymer composition was 0.63.
In addition, a molded body was obtained, its iodine value was measured, and the evaluation test was conducted in the same manner as that adopted in Comparative Example 1 except that this pellet was used. The iodine value of the molded body was 0.65. The molded body had a light transmittance of 89.9% at 400 nm, a high-temperature and high-humidity resistance of 0.6%, and a high-temperature laser resistance of 25.1%.

### (Comparative Example 3)

A pellet of polymer composition was obtained and its iodine value was measured in the same manner as that adopted in Example 1 except that the hydrogenated product obtained in Synthesis Example 1 was replaced with the addition polymer (having an iodine value of 0.40) obtained in Synthesis Example 2. The iodine value of the polymer composition was 0.56.
In addition, a molded body was obtained, its iodine value was measured, and the evaluation test was conducted in the same manner as that adopted in Comparative Example 1 except that this pellet was used. The iodine value of the molded body was 0.63. The molded body had a light transmittance of 88.9% at 400 nm, a high-temperature and high-humidity resistance of 0.7%, and a high-temperature laser resistance of 31.5%.

### (Comparative Example 4)

A pellet of polymer composition was obtained and its iodine value was measured in the same manner as that adopted in Comparative Example 1 except that the hydrogenated product obtained in Synthesis Example 1 was replaced with the hydrogenated polymer (having an iodine value of 0.08) obtained in Synthesis Example 3 and 0.2 part of 2-[1-(2-hydroxy-3,5-di-t-pentylphenyl)ethyl]-4,6-di-t-pentylphenyl acrylate (antioxidant C) was further mixed. The iodine value of the polymer composition was 0.67.
In addition, a molded body was obtained, its iodine value was measured, and the evaluation test was conducted in the same manner as that adopted in Comparative Example 1 except that this pellet was used. The iodine value of the molded body was 0.68. The molded body had a light transmittance of 89.8% at 400 nm, a high-temperature and high-humidity resistance of 0.8%, and a high-temperature laser resistance of 36.2%.

### (Example 2)

A pellet of polymer composition was obtained and its iodine value was measured in the same manner as that adopted in Example 1 except that the hydrogenated product obtained in Synthesis Example 1 was replaced with the hydrogenated polymer (having an iodine value of 0.08) obtained in Synthesis Example 3. The iodine value of the polymer composition was 0.36.
In addition, a molded body was obtained, its iodine value was measured, and the evaluation test was conducted in the same manner as that adopted in Comparative Example 1 except that this pellet was used. The iodine value of the molded body was 0.38. The molded body had a light transmittance of 90.7% at 400 nm, a high-temperature and high-humidity resistance of 0.8%, and a high-temperature laser resistance of 0.8%.

### (Comparative Example 5)

A polymer composition was obtained in the same manner as that adopted in Example 1 except that when kneading the polymers and the additives by a double screw kneading machine, the kneading conditions were set to a resin temperature of 260°C, a feed rate of 5 kg/hr, and a resin residence time of 160 seconds, and the inlet for introducing polymers and additives was filled with an air atmosphere. The iodine value of the polymer composition was 0.72.
In addition, a molded body was obtained, its iodine value was measured, and the evaluation test was conducted in the same manner as that adopted in Example 1 except that the pellet input port was filled with an air atmosphere, and the resin temperature and the resin residence time during the injection molding was set to 300°C and 210 seconds, respectively. The iodine value of the molded body was 1.21. The molded body had a light transmittance of 86.0% at 400 nm, a high-temperature and high-humidity resistance of 0.8%, and a high-temperature laser resistance of 66%.

### (Comparative Example 6)

A polymer composition was obtained in the same manner as that adopted in Example 2 except that when kneading the polymers and the additives by a double screw kneading machine, the kneading conditions were set to a resin temperature of 260°C, a feed rate of 5 kg/hr, and a resin residence time of 160 seconds, and the inlet for introducing polymers and additives was filled with an air atmosphere. The iodine value of the polymer composition was 0.95.
In addition, a molded body was obtained, its iodine value was measured, and the evaluation test was conducted in the same manner as that adopted in Example 2 except that the pellet input port was filled with an air atmosphere, and the resin temperature and the resin residence time during the injection molding was set to 300°C and 210 seconds, respectively. The iodine value of the molded body was 1.42. The molded body had a light transmittance of 85.0% at 400 nm, a high-temperature and high-humidity resistance of 0.8%, and a high-temperature laser resistance of 78%.

## Claims

1. A polymer composition comprising:
an alicyclic structure-containing polymer; and
a light stabilizer and/or an antioxidant,
wherein the polymer composition has an iodine value of no less than 0.1 and no more than 0.55.

2. The polymer composition according to claim 1, wherein an iodine value of the alicyclic structure-containing polymer is 0.1 or less.

3. The polymer composition according to claim 1, wherein the alicyclic structure-containing polymer is a norbornene based polymer.

4. The polymer composition according to claim 3,
wherein the norbornene based polymer is a hydrogenated product of an addition polymer formed of a norbornene monomer and another monomer which is addition copolymerizable therewith.

5. The polymer composition according to claim 1, wherein the alicyclic structure-containing polymer is a vinyl alicyclic hydrocarbon polymer.

6. The polymer composition according to claim 1, wherein the light stabilizer is a hindered amine light stabilizer.

7. The polymer composition according to claim 1, wherein the light stabilizer is N,N'-bis(2,2,6,6-tetramethyl-4-piperidyl)-N,N'-diformyl hexamethylenediamine.

8. The polymer composition according to claim 1, wherein the antioxidant is a phenol antioxidant.

9. The polymer composition according to claim 1, wherein the antioxidant is 2-[1-(2-hydroxy-3,5-di-t-pentylphenyl)ethyl]-4,6-di-t-pentylphenyl acrylate.

10. The polymer composition according to claim 1, further comprising a moisture resisting agent.

11. An optical molded body comprising a polymer composition containing an alicyclic structure-containing polymer and a light stabilizer and/or an antioxidant, which has an iodine value of no less than 0.1 and no more than 0.6.

12. The optical molded body according to claim 11, wherein an iodine value of the alicyclic structure-containing polymer is 0.1 or less.

13. The optical molded body according to claim 11, wherein the alicyclic structure-containing polymer is a norbornene based polymer.

14. The optical molded body according to claim 13, wherein the norbornene based polymer is a hydrogenated product of an addition polymer formed of a norbornene monomer and another monomer which is addition copolymerizable therewith.

15. The optical molded body according to claim 11, wherein the alicyclic structure-containing polymer is a vinyl alicyclic hydrocarbon polymer.

16. The optical molded body according to claim 11, wherein the light stabilizer is a hindered amine light stabilizer.

17. The optical molded body according to claim 11, wherein the light stabilizer is N,N'-bis(2,2,6,6-tetramethyl-4-piperidyl)-N,N'-diformyl hexamethylenediamine.

18. The optical molded body according to claim 11, wherein the antioxidant is a phenol antioxidant.

19. The optical molded body according to claim 11, wherein the antioxidant is 2-[1-(2-hydroxy-3,5-di-t-pentylphenyl)ethyl]-4,6-di-t-pentylphenyl acrylate.

20. The optical molded body according to claim 11, further comprising a moisture resisting agent.
